# EUROPEAN PATENT APPLICATION

(11) **EP 1 850 492 A2**
(43) Date of publication of application: **31.10.2007**
(21) Application number: 07008630.1
(22) Date of filing: 27.04.2007
(51) Int. Cl.: H04B 1/40, H04B 1/707

(54) **Apparatus for sharing CDMA scheme and Japanese CDMA scheme in communication system**

(30) Priority: 28.04.2006 KR 20060038542
(71) Applicant: Samsung Electronics Co., Ltd., Yeongtong-gu Suwon-si, Gyeonggi-do (KR)
(72) Inventor: Kim, Jong-Yong, Seongnam-si, Gyeonggi-do (KR); Park, Jae-Sun, Suwon-si Gyeonggi-do (KR); Kim, Kee-Dug, Yangcheon-gu Seoul (KR); Lee, Seong-Wook, Suwon-si Gyeonggi-do (KR)
(74) Representative: Boakes, Jason Carrington

(57) **Abstract**

Provided is an apparatus for sharing specific functions in a portable terminal capable of selectively using one of a CDMA communication system and a JCDMA communication system. The portable terminal includes a first switch unit and a second switch unit. The first switch unit selectively separates one of a CDMA RX signal and a JCDMA RX signal from a signal received through an antenna and outputs the separated signal to a low-noise amplifier. The second switch unit separates a frequency band of the selected communication system from an output signal of the LNA to select a specific-band signal and outputs the specific-band signal to a mixer.

## Description

### PRIORITY

This application claims priority under 35 U.S.C. § 119 to an application filed in the Korean Intellectual Property Office on April 28, 2006 and allocated Serial No. 2006-38542, the contents of which are incorporated herein by reference.

### BACKGROUND OF THE INVENTION

### 1. Field of the Invention

The present invention relates generally to sharing specific functions when selectively using a Code Division Multiple Access (CDMA) communication system and a Japanese CDMA (JCDMA) communication system, and, more particularly, to an apparatus for sharing specific functional blocks in a portable terminal capable of selectively using one of the CDMA communication system and the JCDMA communication system.

### 2. Description of the Related Art

Portable terminals capable of operating in heterogeneous communication systems are being developed according to the gradual development of technologies for manufacturing portable terminals. A CDMA communication system currently commercialized in Korea uses a reception (RX) frequency band of about 824~849 MHz and a transmission (TX) frequency band of about 869~894 MHz when using a frequency band of below 1 GHz.

Unlike the Korean CDMA communication system, the JCDMA uses a frequency band of 800 MHz but uses a TX frequency band of about 898~924 MHz and an RX frequency band of about 843~869 MHz. That is, although the CDMA communication system and the JCDMA communication system use different frequency bands, the TX/RX frequency bands of the CDMA communication system are similar, respectively, to the RX/TX frequency bands of the JCDMA communication system.

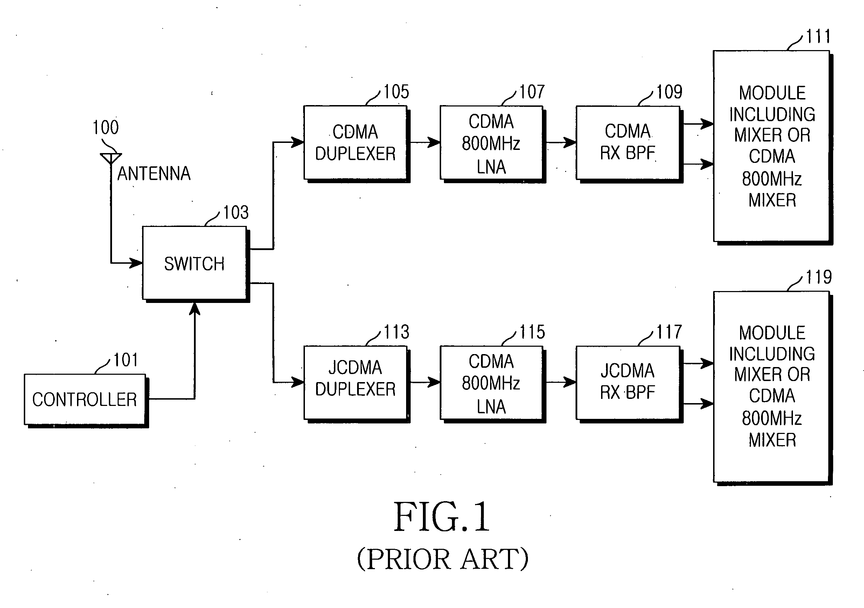

FIG. 1 is a block diagram illustrating a switch and RX functional blocks of a conventional portable terminal capable of using the CDMA communication system and the JCDMA communication system. Referring to FIG. 1, because the TX/RX frequency bands of the CDMA communication system are different respectively from the TX/RX frequency bands of the JCDMA communication system, functional blocks such as duplexers 105 and 113 and RX Band-Pass Filters (BPFs) 109 and 117, which selectively operate only at specific frequencies, are suitably used for corresponding frequency bands.

Under the control of a controller 101, a switch 103 is used to select one of the CDMA communication system and the JCDMA communication system. According to a user's selection, the controller 101 operates the switch 103 so that the portable terminal can operate in a mode using the selected communication system.

A CDMA duplexer 105, a Low-Noise Amplifier (LNA) 107, a CDMA RX BPF 109, and a mixer 111 are used for CDMA communication, while a JCDMA duplexer 113, an LNA 115, a JCDMA RX BPF 117, and a mixer 119 are used for JCDMA communication.

When an antenna 100 and the CDMA duplexer 105 are connected by the switch 103, that is, when the portable terminal operates in a CDMA mode, signals received through the antenna 100 are transferred through the CDMA duplexer 105, the LNA 107 and the CDMA RX BPF 109 to the mixer 111.

When the antenna 100 and the JCDMA duplexer 113 are connected by the switch 103, that is, when the portable terminal operates in a JCDMA mode, signals received through the antenna 100 are transferred through the JCDMA duplexer 113, the LNA 115 and the JCDMA RX BPF 109 to the mixer 119.

The CDMA duplexer 105 is connected to the antenna 100 to separate an RX signal from a signal received through the antenna 100. Due to attenuation and noise during transmission, an output signal of the CDMA duplexer 105 contains noise and has a very-low signal level. The LNA 107 amplifies the output signal of the CDMA duplexer 105 into a signal with minimized noise.

An output signal of the LNA 107 contains several frequency bands, and the CDMA RX BPF 109 extracts only the CDMA frequency band from the several frequency bands.

A signal extracted by the CDMA RX BPF 109 may be a signal that has a phase difference and a time delay from an original signal provided by a Base Station (BS). In order to compensate the phase difference and the time delay, the CDMA RX BPF 109 may have two output ports for outputting the same signal differentially. In the conventional systems, the CDMA RX BPF 109 has one input port and two output ports.

The mixer 111 restores the original signal from the BS. Because an output signal of the CDMA RX BPF 109 corresponds to the original signal containing a carrier frequency and transmitted from the BS, the mixer 111 removes the carrier frequency from the output signal of the CDMA RX BPF 109 to restore the original signal. Thereafter, although not illustrated, a synchronization process and a data acquisition process are performed using the original signal.

When the antenna 100 and the JCDMA duplexer 113 are connected by the switch 103, that is, when the portable terminal operates in a JCDMA mode, the JCDMA duplexer 113, the LNA 115, the JCDMA RX BPF 117, and the mixer 119 operate in the same way as the corresponding functional blocks for the CDMA communication system.

Although the CDMA communication system and the JCDMA communication system use different frequency bands, the TX/RX frequency bands of the CDMA communication system are similar respective to the RX/TX frequency bands of the JCDMA communication system. Therefore, the LNA and the mixer can be shared by the CDMA and JCDMA communication systems.

However, the conventional portable terminal uses the LNA and the mixer in duplicate fashion as illustrated in FIG. 1, which increases the size and complexity of the portable terminal.

### SUMMARY OF THE INVENTION

An object of the present invention is to substantially solve at least the above problems and/or disadvantages and to provide at least the advantages below. Accordingly, an object of the present invention is to provide an apparatus for sharing specific functions in a portable terminal capable of selectively using one of the CDMA communication system and the JCDMA communication system.

Another object of the present invention is to provide an apparatus for sharing common functions in a portable terminal capable of selectively using one of the CDMA communication system and the JCDMA communication system.

According to one aspect of the present invention, a portable terminal capable of selectively using one of a CDMA communication system and a JCDMA communication system includes a first switch unit for selectively separating one of a CDMA RX signal and a JCDMA RX signal from a signal received through an antenna and outputting the separated signal to an LNA; and a second switch unit for separating a frequency band of the selected communication system from an output signal of the LNA to select a specific-band signal and outputting the specific-band signal to a mixer.

According to another aspect of the present invention, a portable terminal capable of selectively using one of a CDMA communication system and a JCDMA communication system includes a first switch for connecting an antenna to one of a CDMA duplexer and a JCDMA duplexer; and a second switch for connecting an LNA to one of the CDMA duplexer and the JCDMA duplexer.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram illustrating a switch and RX functional blocks of a conventional portable terminal capable of using the CDMA communication system and the JCDMA communication system; and
FIG. 2 is a block diagram illustrating switches and RX functional blocks of a portable terminal capable of using the CDMA communication system and the JCDMA communication system, according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides a portable terminal capable of using the CDMA communication system and the JCDMA communication system and also to provide an apparatus for sharing common functions in the portable terminal.

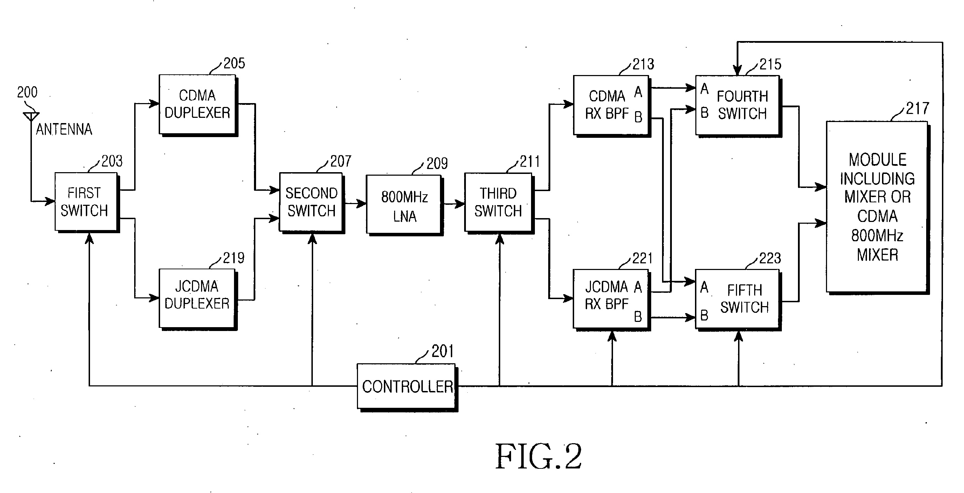

FIG. 2 is a block diagram illustrating switches and RX functional blocks of a portable terminal capable of using the CDMA communication system and the JCDMA communication system, according to the present invention. Referring to FIG. 2, the portable terminal includes an antenna 200, a controller 201, a first switch 203, a CDMA duplexer 205, a JCDMA duplexer 219, a second switch 207, an LNA 209, a third switch 211, a CDMA RX BPF 213, a JCDMA RX BPF 221, a fourth switch 215, a fifth switch 223, and a mixer 217.

The duplexers 205 and 219 are connected to the antenna 200 to separate TX/RX signals of different frequency bands from a signal received through the antenna 200. Because the CDMA communication system and the JCDMA communication system use different TX/RX frequency bands, functional blocks suitable for the corresponding frequency bands are used as the duplexers 205 and 219. In addition, because the RX BPFs 213 and 221 are used to extract only the corresponding RX frequency bands, functional blocks suitable for the corresponding RX frequency bands are used as the RX BPFs 213 and 221.

Although the CDMA communication system and the JCDMA communication system use different frequency bands, the TX/RX frequency bands of the CDMA communication system are similar respective to the RX/TX frequency bands of the JCDMA communication system. Therefore, functional blocks such as the LNA 209 and the mixer 217 can be shared for the CDMA communication system and the JCDMA communication system.

Under the control of the controller 201, the switches 203, 207, 211, 215 and 223 are operated such that the portable terminal can operate in one of CDMA mode and JCDMA mode.

Under the control of the controller 201, the first switch 203 connects the antenna 200 to one of the CDMA duplexer 205 and the JCDMA duplexer 219.

Under the control of the controller 201, the second switch 207 connects the LNA 209 to one of the CDMA duplexer 205 and the JCDMA duplexer 219 so that the LNA 209 can be shared for the CDMA and JCDMA modes.

Under the control of the controller 201, the third switch 211 connects the LNA 209 to one of the CDMA RX BPF 213 and the JCDMA RX BPF 221.

A signal outputted from the CDMA RX BPF 213 and the JCDMA RX BPF 221 may be a signal that has a phase difference and a time delay from an original signal provided by a Base Station (BS). In order to compensate the phase difference and the time delay by the mixer 217, the RX BPF may have a plurality of output ports for outputting the same signal differentially.

For example, the CDMA RX BPF 213 and the JCDMA RX BPF 221 each have one input port and two output ports as illustrated in FIG. 2. Accordingly, the fourth switch 215 and the fifth switch 223, which connect the output ports of the CDMA RX BPF 213 and the JCDMA RX BPF 221 to the mixer 217, each have two input ports.

An input port A of the fourth switch 215 is connected to an output port A of the CDMA RX BPF 213, while an input port B of the fourth switch 215 is connected to an output port A of the JCDMA RX BPF 221. Similarly, an input port A of the fifth switch 223 is connected to an output port B of the CDMA RX BPF 213, while an input port B of the fifth switch 223 is connected to an output port B of the JCDMA RX BPF 221.

That is, under the control of the controller 201, the fourth switch 215 and the fifth switch 223 connect the mixer 217 to one of the CDMA RX BPF 213 and the JCDMA RX BPF 221.

Consequently, when the portable terminal operates in the CDMA mode, a signal received through the antenna 200 is transmitted through the first switch 203 to the CDMA duplexer 205, and an output signal of the CDMA duplexer 205 is transmitted through the second switch 207 to the LNA 209. An output signal of the LNA 209 is transmitted through the third switch 211 to the CDMA RX BPF 213, and an output signal of the CDMA RX BPF 213 is transmitted through the fourth switch 215 and the fifth switch 223 to the mixer 217.

When the portable terminal operates in the JCDMA mode, a signal received through the antenna 200 is transmitted through the first switch 203 to the JCDMA duplexer 219, and an output signal of the JCDMA duplexer 219 is transmitted through the second switch 207 to the LNA 209. An output signal of the LNA 209 is transmitted through the third switch 211 to the JCDMA RX BPF 221, and an output signal of the JCDMA RX BPF 221 is transmitted through the fourth switch 215 and the fifth switch 223 to the mixer 217.

As described above, the present invention makes it possible to share the common functions in the portable terminal. Accordingly, it is possible to reduce the design cost, complexity and size of the portable terminal.

While the invention has been shown and described with reference to certain preferred embodiments thereof, it will be understood by those skilled in the art that various changes in form and details may be made therein without departing from the spirit and scope of the invention as defined by the appended claims.

## Claims

1. A portable terminal capable of selectively using one of a Code Division Multiple Access (CDMA) communication system and a Japanese CDMA (JCDMA) communication system, the terminal comprising:
a first switch unit for selectively separating one of a CDMA reception (RX) signal and a JCDMA RX signal from a signal received through an antenna and outputting the separated signal to a Low-Noise Amplifier (LNA); and
a second switch unit for separating a frequency band of the selected communication system from an output signal of the LNA to select a specific-band signal and outputting the specific-band signal to a mixer.

2. The portable terminal of claim 1, wherein the first switch unit comprises:
a first switch for connecting the antenna to one of a CDMA duplexer and a JCDMA duplexer; and
a second switch for connecting the LNA to one of the CDMA duplexer and the JCDMA duplexer.

3. The portable terminal of claim 1, wherein the second switch unit comprises:
a third switch for connecting the LNA to one of a CDMA RX Band-Pass Filter (BPF) and a JCDMA RX BPF; and
a fourth switch for connecting the mixer to one of the CDMA RX BPF and the JCDMA RX BPF.

4. The portable terminal of claim 3, wherein the second switch unit further comprises a fifth switch for connecting the mixer to one of the CDMA RX BPF and the JCDMA RX BPF, when the CDMA RX BPF and the JCDMA RX BPF each have two output ports.

5. The portable terminal of claim 4, further comprising a controller for controlling the first switch, the second switch, a third switch, a fourth switch, and the fifth switch for the portable terminal to operate in one of the CDMA and JCDMA modes.

6. The portable terminal of claim 5, wherein the first switch connects the antenna to the CDMA duplexer when the portable terminal operates in the CDMA mode, while the first switch connects the antenna to the JCDMA duplexer when the portable terminal operates in the JCDMA mode.

7. The portable terminal of claim 5, wherein the second switch connects the CDMA duplexer to the LNA when the portable terminal operates in the CDMA mode, while the second switch connects the JCDMA duplexer to the LNA when the portable terminal operates in the JCDMA mode.

8. The portable terminal of claim 5, wherein the third switch connects the LNA to the CDMA RX BPF when the portable terminal operates in the CDMA mode, while the third switch connects the LNA to the JCDMA RX BPF when the portable terminal operates in the JCDMA mode.

9. The portable terminal of claim 5, wherein the fourth switch connects the CDMA RX BPF to the mixer when the portable terminal operates in the CDMA mode, while the fourth switch connects the JCDMA RX BPF to the mixer when the portable terminal operates in the JCDMA mode.

10. The portable terminal of claim 5, wherein the fifth switch connects the CDMA RX BPF to the mixer when the portable terminal operates in the CDMA mode, while the fifth switch connects the JCDMA RX BPF to the mixer when the portable terminal operates in the JCDMA mode.

11. A portable terminal capable of selectively using one of a Code Division Multiple Access (CDMA) communication system and a Japanese CDMA (JCDMA) communication system, comprising:
a first switch for connecting an antenna to one of a CDMA duplexer and a JCDMA duplexer; and
a second switch for connecting a Low-Noise Amplifier (LNA) to one of the CDMA duplexer and the JCDMA duplexer.

12. The portable terminal of claim 11, further comprising:
a third switch for connecting the LNA to one of a CDMA reception (RX) Band-Pass Filter (BPF) and a JCDMA RX BPF; and
a fourth switch for connecting a mixer to one of the CDMA RX BPF and the JCDMA RX BPF.

13. The portable terminal of claim 12, further comprising a fifth switch for connecting the mixer to one of the CDMA RX BPF and the JCDMA RX BPF, when the CDMA RX BPF and the JCDMA RX BPF each have two output ports.

14. The portable terminal of claim 13, further comprising a controller for controlling the first switch, the second switch, the third switch, the fourth switch, and the fifth switch for the portable terminal to operate in one of CDMA mode and JCDMA mode.

15. The portable terminal of claim 14, wherein the first switch connects the antenna to the CDMA duplexer when the portable terminal operates in the CDMA mode, while the first switch connects the antenna to the JCDMA duplexer when the portable terminal operates in the JCDMA mode.

16. The portable terminal of claim 14, wherein the second switch connects the CDMA duplexer to the LNA when the portable terminal operates in the CDMA mode, while the second switch connects the JCDMA duplexer to the LNA when the portable terminal operates in the JCDMA mode.

17. The portable terminal of claim 14, wherein the third switch connects the LNA to the CDMA RX BPF when the portable terminal operates in the CDMA mode, while the third switch connects the LNA to the JCDMA RX BPF when the portable terminal operates in the JCDMA mode.

18. The portable terminal of claim 14, wherein the fourth switch connects the CDMA RX BPF to the mixer when the portable terminal operates in the CDMA mode, while the fourth switch connects the JCDMA RX BPF to the mixer when the portable terminal operates in the JCDMA mode.

19. The portable terminal of claim 14, wherein the fifth switch connects the CDMA RX BPF to the mixer when the portable terminal operates in the CDMA mode, while the fifth switch connects the JCDMA RX BPF to the mixer when the portable terminal operates in the JCDMA mode.
